# EUROPEAN PATENT APPLICATION

(11) **EP 3 327 971 A1**
(43) Date of publication of application: **30.05.2018**
(21) Application number: 16306570.9
(22) Date of filing: 29.11.2016
(51) Int. Cl.: H04L 5/00, H04W 72/00, H04W 88/10

(54) **A METHOD AND APPARATUS FOR MANAGING INTERFACES STEERING IN COMMUNICATION DEVICES**

(71) Applicant: Thomson Licensing, 92130 Issy-les-Moulineaux (FR)
(72) Inventor: DE SMEDT, Alex, 2650 Edegem (BE); VAN OOST, Koen, 2650 Edegem (BE)
(74) Representative: Coda, Sandrine

(57) **Abstract**

The invention concerns transmission interfaces steering mechanisms in order to improve the transmission of data between communication devices embedding a plurality of transmission interfaces. Known band steering mechanisms do not provide an efficient traffic load balancing between the two frequency bands which leaves part of the wireless communication capacities unused. To overcome these drawbacks, it is proposed to determine, among a plurality of transmission interfaces embedded in a communication device, which transmission interface to be used for transmitting said data to another communication device. Such a method enables traffic-load balancing between a plurality of transmission interfaces embedded in the communication devices. Such a method enables a communication device to transmit data packets simultaneously on a plurality of transmission interfaces to one or more communication devices.

## Description

### TECHNICAL FIELD

The present invention relates to wireless communications and more particularly to transmission interfaces steering mechanisms in order to improve the transmission of data between communication devices embedding a plurality of transmission interfaces.

### BACKGROUND

Existing communication devices, such as residential gateways, access points, repeaters, mobile phones, computers, etc. may embed at least two distinct transmission interfaces configured to transmit data packets in different frequency bands or using different transmission protocols. Typically, such a communication device may embed a first wireless interface configured to transmit data packets in the 2.4 GHz band and a second wireless interface configured to transmit data packets in the 5 GHz band, as defined in the IEEE (*Institute of Electrical and Electronics Engineers*) standards 802.11n or 802.11ax related to Wi-Fi (*Wireless Fidelity*).

Band steering mechanisms may be implemented when both the communication devices involved in data transmission can connect to either the 2.4 GHz or the 5 GHz bands. In such cases, nowadays, the device first communication device determines which frequency band is to be used to transmit data packets to other communication devices. This can result in an increase number of second communication devices connected by means of the 2.4 GHz band whereas a few numbers of second communication devices are connected by means of the 5 GHz band.

In the case of communication devices embedding wireless transmission interfaces, band steering mechanisms are based on the fact that the first communication device uses the same SSID (*Service Set IDentifier*) on both 2.4 GHz band and 5 GHz band. This is important since if different SSIDs are used for the2.4 GHz band and the 5 GHz band, the second communication device cannot know whether the two frequency bands are managed by the same first communication device and thus constitute the wireless medium of the same wireless network.

When a communication device embeds a first wireless interface configured to receive data packets in the 2.4 GHz band and a second wireless interface configured to receive data packets in the 5 GHz band, known band steering mechanisms consist in either:
- Configuring the communication device to connect to only one of the frequency band, the 2.4 GHz band or to the 5 GHz band,
- Letting the communication device connect to the frequency band with the best RSSI (*Received Signal Strength Indication*),
- Letting another communication device determine which frequency band to use for communicating with the communication device.

However, such band steering mechanisms do not provide an efficient traffic load balancing between the two frequency bands which leaves part of the wireless communication capacities unused. The present invention has been devised with the foregoing in mind.

### SUMMARY OF INVENTION

According to a first aspect of the invention there is provided a method for transmitting data between a first communication device and at least a second communication device connected to said first communication device, the method comprising:
- determining, among a plurality of transmission interfaces embedded in the first communication device, a transmission interface to be used for transmitting said data to the second communication device based on parameters representative of reception capabilities of said second communication device, and at least one parameter representative of a service associated to said data to be transmitted,
- transmitting said data to the second communication device on the determined transmission interface.

Such a method enables traffic-load balancing between a plurality of transmission interfaces embedded in the first communication devices.

Such a method enables a communication device to transmit data packets simultaneously on a plurality of transmission interfaces to one or more second communication devices.

Using a plurality of transmission interfaces, such as two transmission interfaces configured to use the 2.4 GHz and the 5GHz frequency bands defined in the IEEE standards related to WiFi, or a wireless transmission interface and a wired transmission interface, enables to use the full communication capacity of the communication medium, and thus to improve the overall data rate.

Another advantage of such a method is that it may guarantee a given level of Quality of Service (QoS), for certain types of data packets such as data packets belonging to a real-time flow.

According to an embodiment of the invention, the method further comprises determining the parameters representative of the reception capabilities of said at least one second communication device.

The first communication device determines the number of transmission interfaces embedded in the second communication device as well as the frequency bands or the transmission protocols used by said transmission interfaces to receive data transmitted by the first communication device.

According to an embodiment of the invention, the method further comprises storing the determined parameters representative of the reception capabilities of said at least one second communication device together with an identifier of said second communication device.

The identifier of the second communication device is for example its MAC (Media Access Control) address. Storing the MAC address of a given equipment together with the parameters representative the reception capabilities of said second communication device makes it easier and quicker to retrieve the necessary information for determining which transmission interface is to be used for the transmission of the data.

According to an embodiment of the invention, determining the at least one parameter representative of a service associated to said data to be transmitted to the second communication device consists in determining at least a port number associated to said service, said port number being used for transmitting said data to the second communication device.

In the internet protocol (IP) suite, a port is an endpoint of communication in an operating system. The term port may be used for hardware devices, or be implemented in software. In this later case, it is a logical construct that identifies a specific process or a type of network service.

A port is always associated with an IP address of a host, such as the first communication device, and the protocol type of the communication, and thus completes the destination or origination address of a communication session. A port is identified for each address and protocol by a 16-bit number, commonly known as the port number.

Specific port numbers are often used to identify specific services. Of the thousands of enumerated ports, 1024 well-known port numbers are reserved by convention to identify specific service types on a host.

Transport layer protocols, such as the Transmission Control Protocol (TCP) and the User Datagram Protocol (UDP), specify a source and destination port number in headers of data packets.

Applications implementing common services, such as the World Wide Web or emails applications, often use specifically reserved port numbers for receiving service requests from clients. The reserved ports numbers are defined by convention overseen by the Internet Assigned Numbers Authority (IANA).

According to an embodiment of the invention, determining the at least one parameter representative of a service associated to said data to be transmitted to the second communication device consists in inspecting data packets comprising said data to be transmitted to the second communication device.

A mechanism such as Deep Packet Inspection (DPI) is a packet filtering mechanism which consists in examining the payload and the header of a data packet as it is intercepted by an inspection point, such as the first communication device for finding defined criteria or parameters useful for determining how a data packet should be handled.

The type of data comprised in the data packets, the source of the data packets, a port number, etc., are for example information that may be extracted using DPI.

According to an embodiment of the invention, the transmission interfaces embedded in the first communication device are wireless transmission interfaces.

The wireless transmission interfaces may be compliant with different wireless transmission techniques such as Wi-Fi, Bluetooth, etc.

They may also be all of the same type, e.g. Wi-Fi transmission interfaces, but configured to transmit data in different frequency bands.

According to an embodiment of the invention, the transmission interfaces embedded in the first communication device are wired transmission interfaces.

The wired transmission interfaces may be compliant with different wired transmission techniques such as Ethernet or PLC (Power Line Communication).

According to an embodiment of the invention, at least one of the transmission interfaces embedded in the first communication device is a wireless transmission interface and at least another one transmission interfaces is a wired transmission interface.

According to an embodiment of the invention, determining among the plurality of transmission interfaces embedded in the first communication device, the transmission interface to be used for transmitting said data to the second communication device consists in selecting the transmission interface to be used based on a frequency band used by said selected transmission interface for transmitting data.

Using a set of policy rules that may be updated based on the needs of a telecommunication operator managing the first communication device and the second communication devices enables to perform an intelligent assignment of the data on different frequency bands.

An example of a policy rule may be to assign a first type of data, for example video data, to a first frequency band and then a second type of data, e.g. non real-time data, to a second frequency band. Another example is a policy rule which enables to transmit data requiring a certain level of QoS may be transmitted in another frequency band which may offer a better QoS level.

Of course, more complex and intelligent policy rules might be implemented.

According to an embodiment of the invention, determining among the plurality of transmission interfaces embedded in the first communication device, the transmission interface to be used for transmitting said data to the second communication device consists in selecting the transmission interface to be used based on a transmission protocol to be used for transmitting data.

An example of a policy rule may be to assign a first type of data, for example video data, to a first transmission interface, such as an Ethernet interface, and then a second type of data, e.g. non real-time data, to a second transmission interface such as a wireless transmission interface which is more prone to transmission errors. Such a solution makes it possible to handle transmission using a plurality of transmission interfaces by not overloading one or more frequency bands, or concentrating less urgent, non-real-time traffic in one frequency band etc.

Another object of the invention concerns a first communication device capable transmitting data to at least a second communication device connected to said first communication device, said first communication device comprising a processor configured to:
- determine, among a plurality of transmission interfaces embedded in the first communication device, a transmission interface to be used for transmitting said data to the second communication device based on parameters representative of reception capabilities of said second communication device, and at least one parameter representative of a service associated to said data to be transmitted,
- transmit said data to the second communication device on the determined transmission interface.

According to an embodiment of the invention, the first communication device is embedded in a home gateway.

According to an embodiment of the invention, the first communication device is embedded in a wireless access point.

According to an embodiment of the invention, the first communication device is embedded in a wireless repeater.

According to an embodiment of the invention, the first communication device is embedded in an end-user equipment such as a mobile phone, a tablet, a computer, a Set Top Box, etc.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
Figure 1 represents a system in which an embodiment of the invention may be implemented;
Figure 2 represents a more detailed view of a communication device and more particularly a more detail view of an interface steering module according to an embodiment of the invention,
Figure 3 is a schematic block diagram illustrating an example of the communication device according to an embodiment of the invention,
Figure 4 is a flow chart for explaining a process for determining among a plurality of transmission interfaces embedded in the communication device the one to be used for transmitting data to another communication device according to an embodiment of the invention.

### DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

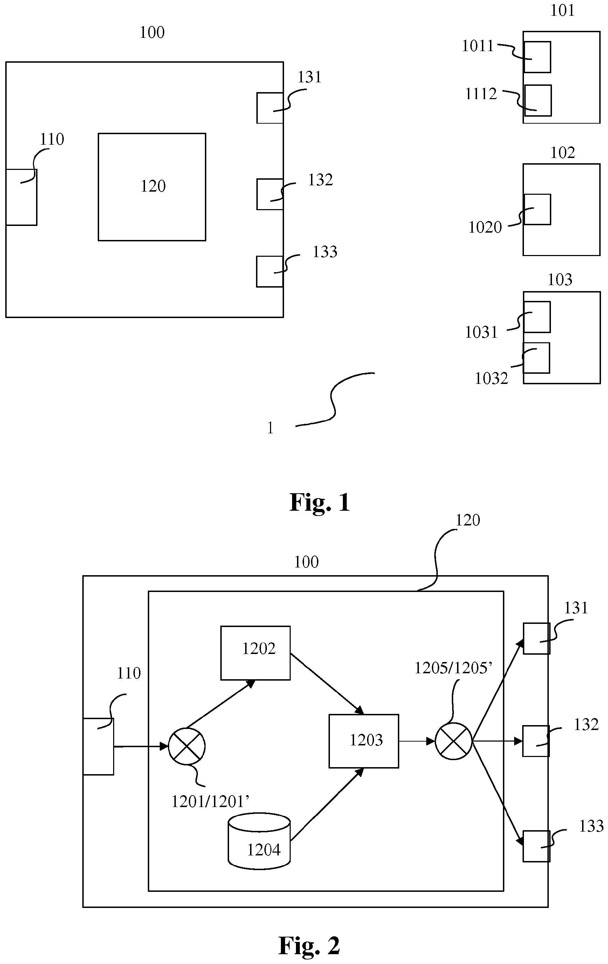

**Figure 1** represents a system 1 in which an embodiment of the invention may be implemented. The system 1 comprises a first communication device 100, a second communication device 101, a third communication device 102 and a fourth communication device 103. The system 1 may comprise more than four communication devices.

The first communication device 100 is connected to each of the three communication devices 101, 102 and 103. In an embodiment of the invention, the first communication device 100 may be a home gateway and the second communication 101 device may be a smartphone, the third communication device 102 may be a computer and the fourth communication device 103 may be a Set Top Box.

A home gateway is a network device interconnecting a broadband network, such as an operator network or the Internet, and a LAN *(Local Area Network).* The home gateway receives data from the broadband network and transmits them to a given communication device, such as communication devices 101, 102, 103, connected to the home gateway. The home gateway also transmits data sent by at least one of the communication device 101, 102, 103 to the broadband network.

In another embodiment of the invention the first communication device 100 may be a home gateway and the second communication 101 device may be a repeater or an extender, the third communication device 102 may be a smartphone and the fourth communication device 103 may be a Set Top Box.

A repeater is a network device, for example, located in the LAN, which receives a signal conveying data and retransmits it. Repeaters are used to extend transmission range so that the signal can cover longer distances or be received on the other side of an obstruction, such as a load-bearing wall.

As represented on figure 1, the first communication device 100 is a home gateway. The first communication device 100 comprises at least one network interface 110 for communicating with the broadband network. Such a network interface 110 is for example configured to receive and transmit data from and to a DSLAM (*Digital Subscriber Line Access Multiplexer*) using xDSL (*x Digital Subscriber Line*) or from and to an OLT (*Optical Line Termination)* through an optical fiber. The network interface 110 is connected, either by a bridge or a router, to an interface steering module 120. The interface steering module 120 is connected to a plurality of transmission interfaces 131, 132, 133 configured to transmit data to and receive data from the communication devices 101, 102 and 103.

The transmission interfaces 131, 132, 133 may be wireless interfaces such as Wi-Fi capable interfaces, Bluetooth® capable interfaces, DECT (*Digital Enhanced Cordless Telecommunications)* capable interfaces, etc.

The transmission interfaces 131, 132, 133 may be wired interfaces such as Ethernet interfaces or USB (*Universal Serial Bus*) interfaces, etc.

In an embodiment of the invention, the first communication device 100 may embed both wireless and wired transmission interfaces.

The second communication device 101 embeds two transmission interfaces 1011 and 1012. These transmission interfaces 1011 and 1012 maybe wireless transmission interfaces and/or wired transmission interfaces. The second communication device 101 may comprise more than two transmission interfaces.

The third communication device 102 embeds one transmission interface 1020. This transmission interface 1020 maybe a wireless transmission interface or a wired transmission interface. The third communication device 102 may comprise more than one transmission interface.

The fourth communication device 103 embeds two transmission interfaces 1031 and 1032. These transmission interfaces 1031 and 1032 maybe wireless transmission interfaces and or wired transmission interfaces. The fourth communication device 103 may comprise more than two transmission interfaces.

**Figure 2** represents a more detailed view of the first communication device 100 and more particularly a more detail view of the interface steering module 120 according to an embodiment of the invention.

The interface steering module 120 comprises a router 1201 connected to the network interface 110. In another embodiment of the invention, a bridge 1201' is connected to the network interface 110.The router 1201, or the bridge 1201' depending the embodiment of the invention, is connected to a module 1202 capable of determining at least one parameter representative of a service associated to data to be transmitted by the first communication device 100.

Such a module 1202 may be for example a module executing a DPI (*Deep Packet Inspection*). DPI is a packet filtering mechanism that examines the payload and sometimes the header of a packet as it passes an inspection point, searching for protocol non-compliance, viruses, spam, intrusions, or defined criteria to decide whether the packet may pass or if it needs to be routed/bridged to a different destination, or, for the purpose of collecting statistical information that functions at the application layer of the OSI (*Open Systems Interconnection model*).

DPI mechanisms enable advanced network management, user service, and security functions as well as internet data mining, and internet censorship.

In another embodiment of the invention, the module 1202 may be a module capable of determining at least a port number associated to a service associated to data to be transmitted by the first communication device 100.

A steering module 1203 is connected to the module 1202 and to a database 1204. The database 1204 stores policy rules intended to be used for determining which transmission interfaces of the first communication device to be used to transmit data associated to a given service to one of the communication devices 101, 102, 103.

The steering module 1203 determines the transmission interface 131, 132, 133 to be used to transmit data associated to a given service to one of the communication devices 101, 102, 103 based on the parameters representative of a service associated to said data to be transmitted determined by the module 1202 and the policy rules stored in the database 1204.

The steering module 1203 is connected to a router 1205 which is connected to each of the transmission interfaces 131, 132, 133. In another embodiment of the invention, the steering module 1203 is connected to a bridge 1205' which is capable of establishing connection with each of the transmission interfaces 131, 132, 133.

The same steering module 120 may be implemented in the communication devices 101, 102, 103, for handling data transmission toward the broadband network.

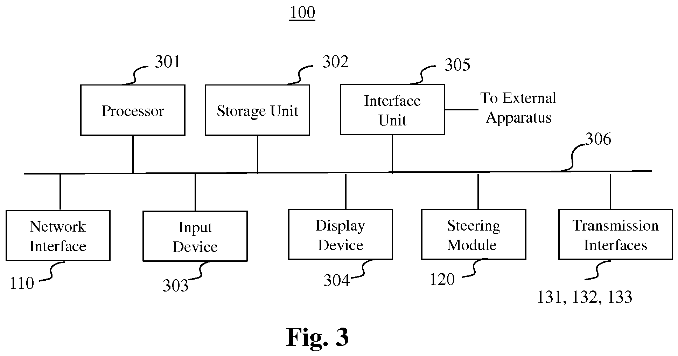

**Figure 3** is a schematic block diagram illustrating an example of the first communication device according to an embodiment of the invention.

The first communication device 100 comprises a processor 301, a storage unit 302, an input device 303, a display device 304, and an interface unit 305 which are connected by a bus 306. Of course, constituent elements of the first communication device 100 may be connected by a connection other than a bus connection.

The processor 301 controls operations of the first communication device 100. The storage unit 302 stores at least one program capable of determine among the plurality of transmission interfaces 131, 132, 133 embedded in the first communication device 100 the one to be used for transmitting data to another communication device 101, 102, 103, to be executed by the processor 301, and various data, such as the policy rules stored in the database 1204 of the interface steering module 120, parameters used by computations performed by the processor 301, intermediate data of computations performed by the processor 301, and so on. The processor 301 may be formed by any known and suitable hardware, or software, or a combination of hardware and software. For example, the processor 301 may be formed by dedicated hardware such as a processing circuit, or by a programmable processing unit such as a CPU (*Central Processing Unit*) that executes a program stored in a memory thereof.

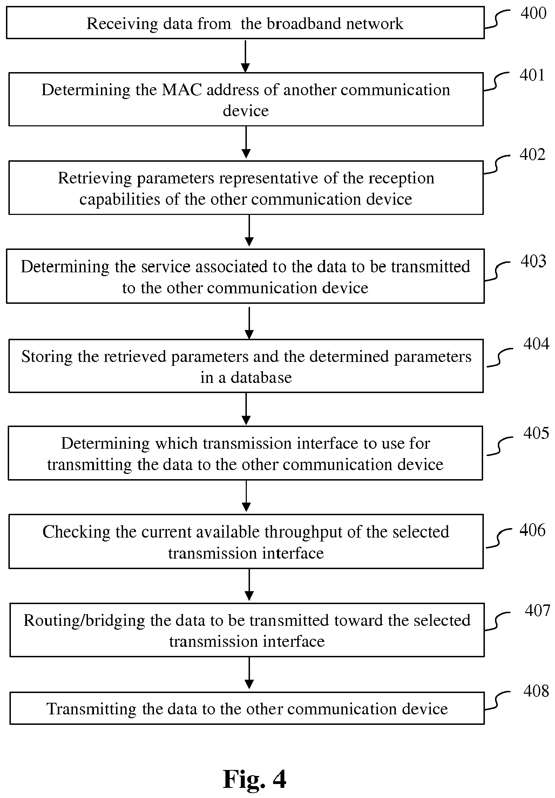

The storage unit 302 may be formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a process for determining among the plurality of transmission interfaces 131, 132, 133 embedded in the first communication device 100 the one to be used for transmitting data to another communication device 101, 102, 103, according to an embodiment of the present disclosure as described hereinafter with reference to figure 4 .

The input device 303 may be formed by a keyboard, a pointing device such as a mouse, or the like for use by the user to input commands, to make user's selections of parameters used for selecting the transmission interface to be used. The output device 304 may be formed by a display device to display, for example, a Graphical User Interface (GUI. The input device 303 and the output device 304 may be formed integrally by a touchscreen panel, for example.

The interface unit 305 provides an interface between the first communication device 100 and an external apparatus. The interface unit 305 may be communicable with the external apparatus via cable or wireless communication. In an embodiment, the external apparatus may be an optical acquisition system such as an actual camera.

The interface steering module 120, the network interface 110 and the transmission interfaces 131, 132 and 133 are also connected to the bus 306.

The above description, in reference to figure 3, of the first communication device 100 applies to the communication devices 101, 102, 103, for handling data transmission toward the broadband network.

**Figure 4** is a flow chart for explaining a process for determining among the plurality of transmission interfaces 131, 132, 133 embedded in the first communication device 100 the one to be used for transmitting data to another communication device 101, 102, 103.

In a step 400 the first communication device 100 receives data from the broadband network in its network interface 110. In another embodiment, the first communication device 100 generates the data to be transmitted to one of the communication devices 101, 102, 103, instead of receiving the data from the broadband network.

In a step 401, the processor 301 of the first communication device 100 executes a program for determining a MAC address identifying the communication device 101, 102, 103 to which the received data is to be transmitted.

In a step 402, the processor 301 of the first communication device 100 executes a program for retrieving parameters representative of the reception capabilities of the communication devices 101, 102, 103. Those parameters representative of reception capabilities comprise the number and the types of transmission interfaces embedded in each communication devices 101, 102, 103, such as wireless interfaces and the communication technologies they use, e.g. Wi-Fi, DECT, Bluetooth®, etc., the frequency band used for transmission; wired interfaces, and other information such as IP addresses, as well as the transmission protocols used by said transmission interfaces, e.g. TCP, UDP, etc. that may prove useful for data transmission between the first communication device 100 and the communication devices 101, 102, 103. Those parameters representative of the reception capabilities of the communication devices 101, 102, 103 may be retrieved when the communication devices 101, 102, 103 first attach themselves to the first communication device 100.

Those parameters representative of the reception capabilities of the communication devices 101, 102, 103 as well as the MAC addresses of the communication devices 101, 102 and 103 are stored, for example, in the database 1204 of the interface steering module 120 in a step 403.

In a step 403, the module 1202 determines at least one parameter representative of a service associated to the received data to be transmitted by the first communication device 100.

In an embodiment of the invention, the module 1202 is a module capable of determining at least a port number associated to a service associated to data to be transmitted by the first communication device 100. In this case, during the step 403, the module 1202 determines the port number by reading a header of a data packet transporting part of the received data and therefore identifies the service associated to the data.

In another embodiment of the invention, the module 1202 is a module executing DPI. In this case, during the step 403, the module 1202 determines, for example, the service associated to the data, either by determining the port number or by accessing the payload of a data packet, an IP address and a port number of the source emitting data, an IP address and a port number of the destination, i.e. of the communication device 101, 102, 103, intended to receive the data, a required throughput required by the service associated to the data, etc.

The parameters representative of a service associated to the received data to be transmitted by the first communication device 100 may be stored in the database 1204 in a step 404.

In a step 405, the band steering module 120 determines which transmission interface 131, 132, 133, is to be used for transmitting the received data to one of the communication devices 101, 102, 103.

In order to determine the transmission interface 131, 132, 133, the band steering module 120 retrieves parameters representative of the reception capabilities of the communication devices 101, 102, 103, the parameter representative of a service associated to the received data to be transmitted by the first communication device 100, and the policy rules stored in the database 1204.

From all these information the band steering module identifies the communication device, for example, the second communication device 101, to which the data are to be transmitted. Then, the band steering module determines, based on the reception capabilities of the second communication device 101 and the service associated to the received data, which transmission interface to be used for transmitting the data.

For example, the first communication device comprises a first wireless transmission interface 131 configured for transmitting data in the 2.4 GHz frequency band used for Wi-Fi communications, a second wireless transmission interface 132 configured for transmitting data in the 5 GHz frequency band used for Wi-Fi communications and a third wired interface 133.

The second communication device 101 comprises a first wireless transmission interface 1011 configured for transmitting data in the 2.4 GHz frequency band used for Wi-Fi communications, a second wireless transmission interface 1012 configured for transmitting data in the 5 GHz frequency band used for Wi-Fi communications.

The table 1 is an example of the policy rules that are stored in the database 1204.

**Table 1**

| **Policy rule** | **Device** | **Rule** | |
|---|---|---|---|
| 1 | 102 | Always uses 5GHz band | |

| **Policy rule** | **Service cat.** | **2.4 GHz** | **5 GHz** |
|---|---|---|---|
| 2 | email | x | |
| 3 | Browsing (general) | x | |
| 4 | Bittorrent | x | |
| 5 | (browsing)/video | x | x |
| 6 | audio | | x |
| 7 | gaming | | x |
| 8 | other | x | x |

| **Policy rule** | **Video source** | **2.4 GHz** | **5 GHz** |
|---|---|---|---|
| 9 | Netflix | | x |
| 10 | YouTube | x | |
| 11 | Proximus | | x |

As shown on table 1, there is a rule specific to the third communication device 102. The third communication device 102 comprises only one transmission interface 1020 configured to receive data in the 5GHz frequency band. As far as the third communication device 102 is concerned, the first communication device 100 always transmits data to the third communication device using the transmission interface 132 independently of the services associated to the data to be transmitted.

For the second and fourth communication devices 101 and 103 there are different set of policy rules depending on the service or on the source of the service.

During the step 405, the band steering module 120 determines that the received data is to be transmitted to the second communication device 101 and that this second communication device 101 embeds a 2.4 GHz wireless interface 1011 and a 5 GHz wireless interface 1012. The band steering module 120 determines also that the service associated to the data is video.

In the embodiment in which only port numbers are determined, the band steering module 120 applies the rule 5 and selects the 5 GHz wireless transmission interface 132.

In the embodiment in which DPI is performed, the band steering module 120 applies the rule 10, since the source of the data is identified as being YouTube for example. In this case, the band steering module 120 selects the 2.4 GHz wireless transmission interface 131.

Of course other parameters may be taken into account in the definition of the rules, such as the transmission protocols that may be used.

In a step 406, the band steering module 120 checks the current available throughput of the selected transmission interface. If the current available throughput of the selected transmission interface is below a threshold, the band steering module selects another, less loaded, transmission interface for transmitting the data, provided that the communication device 101, 102, 103 to which the data are to be transmitted, embeds a transmission interface capable of receiving the data transmitted by the selected transmission interface of the first communication device 100.

In a step 407, the data to be transmitted to one of the communication devices 101, 102, 103 are either routed or bridged, by the router 1205 respectively the bridge 1205', toward the selected transmission interface 131, 132, 133. The data are then transmitted to one of the communication devices 101, 102, 103 during step 408.

The process for determining among the plurality of transmission interfaces may also be executed in the second communication device 101, the third communication device 102 and the fourth communication device 103 when they transmit data to the first communication device 100 or when the communication devices 101, 102, 103 act as a repeater and transmit the data received from the first communication device 100 to others communication devices.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method for transmitting data between a first communication device and at least a second communication device connected to said first communication device, the method comprising:
- determining, among a plurality of transmission interfaces embedded in the first communication device, a transmission interface to be used for transmitting said data to the second communication device based on parameters representative of reception capabilities of said second communication device, and at least one parameter representative of a service associated to said data to be transmitted,
- transmitting said data to the second communication device on the determined transmission interface.

2. The method according to claim 1, further comprises determining the parameters representative of the reception capabilities of said second communication device.

3. The method according to claim 2 further comprising storing the determined parameters representative of the reception capabilities of said second communication device together with an identifier of said second communication device.

4. The method according to claims 1 to 3, wherein determining the at least one parameter representative of a service associated to said data to be transmitted to the second communication device consists in determining at least a port number associated to said service, said port number being used for transmitting said data to the second communication device.

5. The method according to claims 1 to 3, wherein determining the at least one parameter representative of a service associated to said data to be transmitted to the second communication device consists in inspecting data packets comprising said data to be transmitted to the second communication device.

6. The method according to claims 1 to 5 wherein the transmission interfaces embedded in the first communication device are wireless transmission interfaces.

7. The method according to claims 1 to 5 wherein the transmission interfaces embedded in the first communication device are wired transmission interfaces.

8. The method according to claims 1 to 5 wherein at least one of the transmission interfaces embedded in the first communication device is a wireless transmission interface and at least another one transmission interfaces is a wired transmission interface.

9. The method according to any of claims 1 to 7, wherein determining among the plurality of transmission interfaces embedded in the first communication device, the transmission interface to be used for transmitting said data to the second communication device consists in selecting the transmission interface to be used based on a frequency band used by said selected transmission interface for transmitting data.

10. The method according to any of claims 1 to 7 wherein determining among the plurality of transmission interfaces embedded in the first communication device, the transmission interface to be used for transmitting said data to the second communication device consists in selecting the transmission interface to be used based on a transmission protocol to be used for transmitting data.

11. A first communication device capable transmitting data to at least a second communication device connected to said first communication device, said first communication device comprising a processor configured to:
- determine, among a plurality of transmission interfaces embedded in the first communication device, a transmission interface to be used for transmitting said data to the second communication device based on parameters representative of reception capabilities of said second communication device, and at least one parameter representative of a service associated to said data to be transmitted,
- transmit said data to the second communication device on the determined transmission interface.

12. The first communication device according to claim 11 wherein the first communication device is embedded in a home gateway.

13. The first communication device according to claim 11 wherein the first communication device is embedded in a wireless access point.

14. The first communication device according to claim 11 wherein the first communication device is embedded in a wireless repeater.

15. A computer program **characterized in that** it comprises program code instructions for the implementation of the method according to any of claims 1 to 10 when the program is executed by a processor.

16. A processor readable medium having stored therein instructions for causing a processor to perform the method according to any of claims 1 to 10.

17. Non-transitory storage medium carrying instructions of program code for executing the method according to any of claims 1 to 10, when said program is executed on a computing device.
